# EUROPÄISCHE PATENTANMELDUNG

(11) **EP 2 008 777 A1**
(43) Veröffentlichungstag der Anmeldung: **31.12.2008**
(21) Anmeldenummer: 08017328.9
(22) Anmeldetag: 02.05.2007
(51) Int. Cl.: B25H 1/06, B25H 1/10

(54) **Maschinenständer**

(30) Priorität: 12.06.2006 DE 202006009307 U
(62) Teilanmeldung aus: 07724771.6
(71) Anmelder: Metabowerke Gmbh, 72622 Nürtingen (DE)
(72) Erfinder: Bergmann, Laurenz, 49733 Haren/Ems (DE); Blekker, Ingo, 49843 Uelsen (DE); Evers, Jürgen, 48480 Spelle (DE); Meelker, Thomas, 49767 Twist (DE); Raasch, Klaus, 49744 Geeste (DE)
(74) Vertreter: Gesthuysen, von Rohr & Eggert

(57) **Zusammenfassung**

Gegenstand der Erfindung ist ein Maschinenständer mit einem langgestreckten Tragkörper (2) und endseitig am Tragkörper (2) angeordneten Standbeinen (3), wobei der Tragkörper (2) derart mit in Längsrichtung verlaufenden Formschlußmitteln (4) gestaltet ist, daß an ihm Anbauteile (5), insbesondere mindestens ein Maschinenhalter (5'), gegebenenfalls in Längsrichtung verschiebbar, anbringbar sind. Der Tragkörper (2) ist einstückig als Doppelrohrprofil mit zwei mit seitlichem Abstand voneinander parallel zueinander verlaufenden Profilrohren (6) und mindestens einem die Profilrohre (6) verbindenden Mittelsteg (7) ausgeführt. Im vorliegenden Fall geht es um die Standbeine (3) und deren Anbringung.

## Beschreibung

Die Erfindung betrifft einen Maschinenständer mit den Merkmalen des Oberbegriffs von Anspruch 1.

Maschinenständer der in Rede stehenden Art sind in verschiedenen Ausführungsformen bekannt. Der bekannte Maschinenständer, von dem die Erfindung konkret ausgeht (US-A-5,836,365), dient der sicheren Anordnung und Halterung einer Kapp- und Gehrungssäge auf einer Plattform, die ihrerseits mit zwei an der Unterseite befindlichen Maschinenhaltern auf einem langgestreckten Tragkörper des Maschinenständers befestigt ist. Damit ist es möglich, mit der Kapp- und Gehrungssäge oder einer anderen Werkzeugmaschine in einer Arbeitshöhe zu arbeiten, die einem üblichen Arbeitstisch in einem Werkraum entspricht. Der Maschinenständer ersetzt als transportables Gerät gewissermaßen den Arbeitstisch in der Werkstatt.

An dem langgestreckten Tragkörper des bekannten Maschinenständers sind endseitig jeweils zwei Standbeine angeordnet, die in Gebrauchsstellung trapezartig schräg nach außen gerichtet sind. Dadurch hat der Maschinenständer eine hohe Standfestigkeit. Jeweils zwei Standbeine sind gemeinsam in einer aus Metallblech ausgeführten Konsole am Ende des Tragkörpers schwenkbar gelagert. Jedes Standbein liegt in der Gebrauchsstellung an einem Anschlag der von der Konsole gebildeten Standbeinhalterung an und ist dort verriegelt. Dazu trägt das Standbein ein Riegelelement, das an einer kreisbogenförmigen Kulisse der Konsole läuft und in eine verriegelte Stellung federvorgespannt ist. In einer Ruhestellung mit etwa parallel zum Tragkörper ausgerichteter Lage ist das Standbein ebenfalls durch das Riegelelement an der Kulisse unter Federvorspannung verrastet. Jedes Standbein muß man somit einzeln aus der Ruhestellung freigeben, damit es in die Gebrauchsstellung geschwenkt werden kann.

Jedes Standbein ist als einfaches Stahlrohr ausgeführt und trägt an seinem unteren Ende einen Gummifuß.

Der Tragkörper ist als verwindungssteifes Rückgrat des Maschinenständers einstückig als Hohlprofil aus stranggepreßtem Leichtmetall, insbesondere Aluminium ausgeführt. In die Hohlkammer des Tragkörpers ist ein Verlängerungsprofil einschiebbar, mit dem ein Zusatzständer am eigentlichen Maschinenständer, diesen verlängernd angebracht werden kann.

Der Tragkörper selbst ist derart mit in Längsrichtung verlaufenden Formschlußmitteln, nämlich mehreren T-Schienen ausgestaltet, daß an ihm Anbauteile, insbesondere die bereits erwähnten Maschinenhalter für die Plattform der Werkzeugmaschine, insbesondere der Kapp- und Gehrungssäge, in Längsrichtung verschiebbar angebracht werden können. Neben den Maschinenhaltern für die Plattform der Kapp- und Gehrungssäge sind auch andere Anbauteile an diesen T-Schienen des Tragkörpers anbringbar. Dabei handelt es sich beispielsweise um Werkstückstützen, mit denen ein langes Werkstück in Höhe des Werkstückauflagetisches der Kapp- und Gehrungssäge unterstützt werden kann, und um Längenanschläge für ein solches Werkstück.

Bekannt ist auch ein ähnlicher Maschinenständer (EP-A-1,275,476), der an der Unterseite des Tragkörpers einen Tragegriff aufweist und dessen Tragkörper einstückig als Doppelrohrprofil mit zwei parallel zueinander verlaufenden Profilrohren mit nicht rundem Innenquerschnitt ausgeführt ist. Dadurch ist es möglich, in jedes der beiden Profilrohre ein Verlängerungsrohr mit ebenfalls nicht rundem Außenquerschnitt einzuschieben, so daß der Tragkörper des Maschinenständers zu beiden Enden hin durch Ausziehen der Verlängerungsrohre verlängert werden kann.

Schließlich ist es bekannt (DE-A-103 03 115), zum einen die Standbeine mit ausziehbaren Verlängerungen zu versehen, zum anderen ein Paar von Standbeinen an einem Ende des Tragkörpers mit seitlich abragenden Transportrollen zu versehen.

Die bekannten Maschinenständer sind in der Praxis gut brauchbar. Es hat sich allerdings gezeigt, daß die Konstruktion der bekannten Maschinenständer in verschiedenen Aspekten noch nicht optimal ist. Hier liegt der Erfindung das Problem zugrunde, einen in Hinsicht auf die Standbeine optimierten Maschinenständer zu schaffen.

Für die folgenden Erläuterungen gilt, daß Bezüge zu horizontal und vertikal, Längsrichtung und Querrichtung bei aufgebautem Maschinenständer, also in Gebrauchsstellung, zu verstehen sind, sofern nichts anderes gesagt wird.

Die zuvor aufgezeigte Problemstellung wird gemäß der Erfindung bei einem Maschinenständer mit den Merkmalen des Oberbegriffs von Anspruch 1 durch die Merkmale des kennzeichnenden Teil von Anspruch 1 gelöst.

Bevorzugte Ausgestaltungen und Weiterbildungen sind Gegenstand der Unteransprüche.

Insgesamt geht es um die Ausgestaltung der Standbeine und ihrer Standbeinhalterungen. Einbezogen ist auch die Anbringung von Transportrollen an den Standbeinen.

Nachfolgend wird der erfindungsgemäße Maschinenständer anhand einer lediglich Ausführungsbeispiele darstellenden Zeichnung näher erläutert. Bei der Erläuterung der Ausführungsbeispiele anhand der Zeichnung werden auch und besonderes alle Vorteile und Wirkungen verschiedener Merkmale des erfindungsgemäßen Maschinenständers im Detail erläutert. In der Zeichnung zeigt
- Fig. 1: in einer perspektivischen Ansicht ein Ausführungsbeispiel eines er- findungsgemäßen Maschinenständers ohne aufgebaute Werkzeug- maschine,
- Fig. 2: den Tragkörper des Maschinenständers aus Fig. 1 mit eingeklappten Standbeinen,
- Fig. 3: das Ende des Tragkörpers eines erfindungsgemäßen Maschinen- ständers in einem ersten Ausführungsbeispiel mit in Gebrauchsstel- lung befindlichen Standbeinen,
- Fig. 4: das "Innenleben" der Standbeinhalterung aus Fig. 3,
- Fig. 5: in einer Fig. 3 ähnlichen Perspektive ein zweites Ausführungsbei- spiel einer erfindungsgemäß realisierten Standbeinhalterung,
- Fig. 6: in einer Fig. 5 ähnlichen Perspektive ein drittes Ausführungsbei- spiel einer erfindungsgemäßen Standbeinhalterung,
- Fig. 7: ein unteres Ende eines Standbeins mit einer Verlängerung,
- Fig. 8: ein modifiziertes Ausführungsbeispiel des in Fig. 1 dargestellten Maschinenständers in Ruhestellung mit eingeklappten Standbeinen und daran befindlichen Transportrollen,
- Fig. 9: den Maschinenständer aus Fig. 8 in Gebrauchsstellung,
- Fig. 10: in einer Detailansicht eine Verschiebeführung für eine Transportrol- le an einem Standbein gemäß Fig. 8.

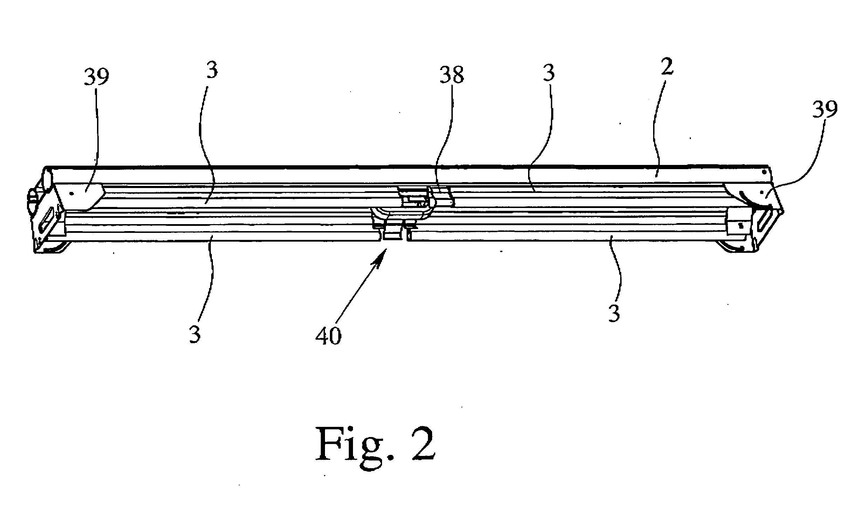

Der in den Zeichnungen in verschiedenen Ausführungsbeispielen dargestellte erfindungsgemäße Maschinenständer dient gewissermaßen als transportabler Arbeitstisch zur Anordnung einer Werkzeugmaschine, insbesondere einer Kapp- und Gehrungssäge 1 (Fig. 2) in einer angenehmen Bearbeitungshöhe, beispielsweise an einer Baustelle oder an unterschiedlichen Stellen im Haus bei einem Innenausbau.

Für die Anordnung der Kapp- und Gehrungssäge 1 auf dem Maschinenständer gibt es verschiedene Möglichkeiten, die umfangreich aus dem Stand der Technik bekannt sind. Grundsätzlich könnte man die Kapp- und Gehrungssäge 1 auf dem Maschinenständer insgesamt ihrerseits nochmals um eine Hochachse drehbar anordnen, um bestimmte Zusatzfunktionen zu erzielen.

Im übrigen gilt, daß der Maschinenständer ein Universalteil ist, das mit jeder Art von Werkzeugmaschine sinnvoll eingesetzt werden kann.

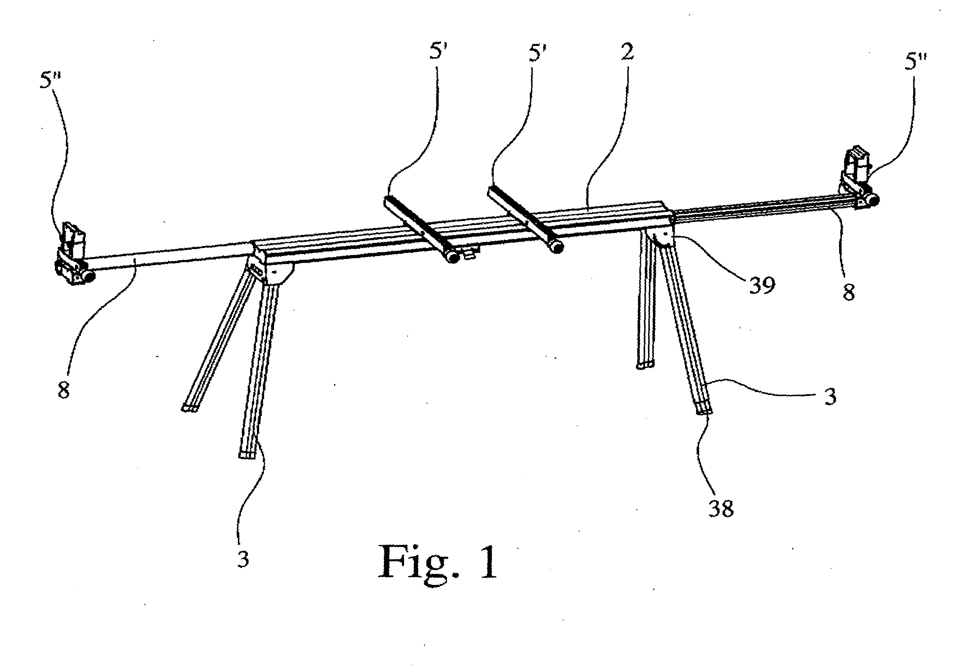

Der in Fig. 1 zunächst in seiner Gesamtheit dargestellte Maschinenständer weist als strukturgebendes Rückgrat einen langgestreckten Tragkörper 2 auf. Endseitig am Tragkörper 2 sind Standbeine 3 angeordnet. Normalerweise hat man insgesamt vier Standbeine 3, die jeweils paarweise am Ende des Tragkörpers 2 in Gebrauchsstellung nach außen trapezartig abragen und so dem Maschinenständer insgesamt einen sicheren Stand geben.

Bereits in Fig. 1 ist angedeutet, daß der Tragkörper 2 derart mit in Längsrichtung verlaufenden Formschlußmitteln 4 gestaltet ist, daß an ihm Anbauteile 5, insbesondere mindestens ein Maschinenhalter 5', in Fig. 1 sind zwei Maschinenhalter 5' zu sehen, anbringbar sind. Die Anbringung der Anbauteile 5 am Tragkörper 2 ist gegebenenfalls längsverschiebbar gewährleistet. Das gilt in Fig. 1 für die Maschinenhalter 5', wodurch es möglich ist, die Werkzeugmaschine, hier die Kapp- und Gehrungssäge 1, genau mittig auf dem Tragkörper 2 zu positionieren.

Anhand der weiteren Figuren werden nun viele Details des erfindungsgemäßen Maschinenständers im einzelnen beschrieben.

Fig. 1 läßt bereits die Standbeine 3 am Tragkörper 2 erkennen. Die Fig. 2 bis 10 zeigen nun Ausführungsbeispiele, die sich mit den Standbeinen 3 des Maschinenständers befassen.

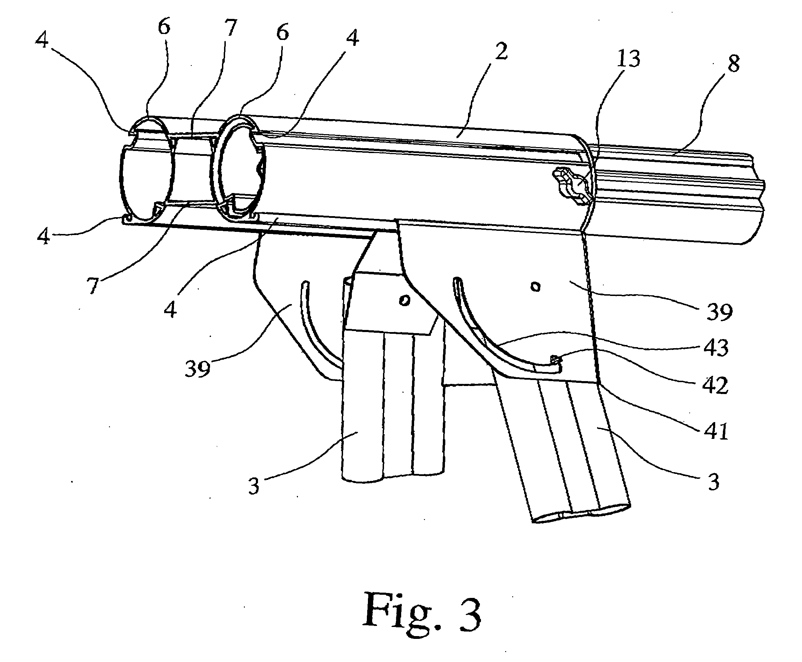

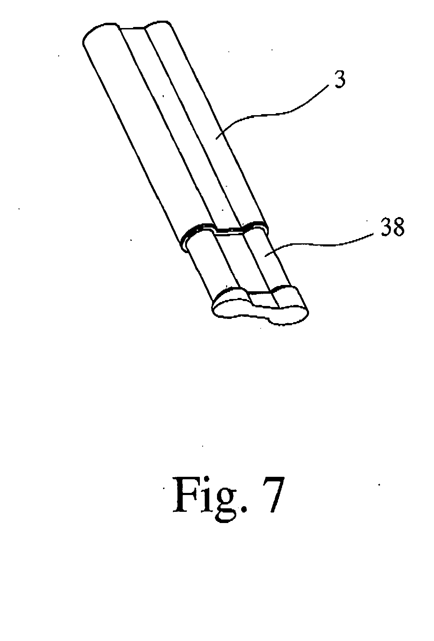

Aus Fig. 3 und 7 läßt sich gut erkennen, daß im hier dargestellten und bevorzugten Ausführungsbeispiel jedes Standbein 3 äußerlich als eine Art Doppelrohrprofil gestaltet ist, so daß es hantelförmig wirkt. Innen gibt es aber keine parallel zueinander verlaufenden Profilrohre, sondern einen durchgehenden Hohlraum. Fig. 7 läßt erkennen, daß dadurch die Möglichkeit geschaffen ist, daß an mindestens einem Standbein 3 endseitig eine ausziehbare und fixierbare Verlängerung 38 angeordnet ist. Selbstverständlich sind an den Standbeinen 3 und der Verlängerung 38 ohne weiteres auch noch die im Stand der Technik bereits bekannten Gummifüße oder entsprechende Fußstücke anbringbar.

Hat man nur eine Verlängerung 38, so hat der Maschinenständer in Gebrauchsstellung eine bestimmte Arbeitshöhe. Mit der Verlängerung 38 lassen sich nur Unebenheiten des Bodens ausgleichen. Hat man an allen Standbeinen 3 Verlängerungen 38, so kann man damit auch die Arbeitshöhe des Maschinenständers insgesamt auf gewünschte Werte einstellen, um so unterschiedlicher Körpergröße der Benutzer Rechnung zu tragen.

Wie bereits im Stand der Technik vorgesehen ist, gilt auch hier, daß an jedem Ende des Tragkörpers 2 zwei Standbeine 3 angeordnet sind und daß jedes Standbein 3 mittels einer Standbeinhalterung 39 am Tragkörper 2 befestigt ist. Im folgenden sollen nun verschiedene Varianten der Standbeinhalterungen 39 erläutert werden.

Zunächst gilt generell, daß jedes Standbein 3 mittels der Standbeinhalterung 39 schwenkbar gelagert ist dergestalt, daß es aus einer Ruhestellung mit etwa parallel zum Tragkörper 2 ausgerichteter Lage in eine Gebrauchsstellung mit gegenüber dem Tragkörper 2 nach unten und außen gerichteter Lage und umgekehrt schwenkbar ist. Dies entspricht den im Stand der Technik durchgehend realisierten Konstruktionen.

Grundsätzlich ist aber zu bemerken, daß die Konstruktion und Befestigung der Standbeine 3 völlig unabhängig davon ist, wie der Maschinenständer im übrigen ausgestaltet ist. Insbesondere könnte man für die weiter oben bereits geschilderten konstruktiven Varianten auch einzeln abnehmbare und umsteckbare Standbeine 3 verwenden.

Bei den schwenkbar angelenkten Standbeinen 3 ist hier anders als im Stand der Technik für eine Fixierung in der Ruhestellung nicht im Bereich der Standbeinhalterungen 39 gesorgt. Vielmehr ist im dargestellten Ausführungsbeispiel (Fig. 2) vorgesehen, daß an der Unterseite des Tragkörpers 2 in der Mitte eine Halteanordnung 40 angebracht ist, in der die unteren Enden der Standbeine 3 in der Ruhestellung eingerastet sind und aus der die Standbeine 3 durch Tastendruck freigebbar sind. Diese Halteanordnung 40 besteht insbesondere aus einem entsprechend geformten Federstahlkörper, in den die hantelartig gestalteten Profile der Standbeine 3, wie Fig. 2 zeigt, sehr einfach und verläßlich einrasten können. Durch Tastendruck entlastet man die Halteanordnung 40, so daß alle vier Standbeine 3 bei in die Höhe gehaltenem Tragkörper 2 gleichzeitig ohne weitere Einflußnahme des Benutzers in ihre Gebrauchsstellung schwenken und dort verrasten können. Man kann auch andere Konstruktionen z.B. aus Kunststoff oder mit Magneten vorsehen.

Hat man in der Länge veränderliche Standbeine 3, so kann man durch eine Längsverschiebung der endseitigen Standbeinhalterungen 39 am Tragkörper 2 und erneute Fixierung am Tragkörper 2 in einer entsprechend in Längsrichtung verschobenen Stellung erreichen, daß die Halteanordnung 40 in der Mitte des Tragkörpers 2 immer wirksam bleibt.

Allen in den Fig. 3 bis 6 dargestellten Ausführungsbeispielen ist gemeinsam, daß jedes Standbein 3 zumindest in der Gebrauchsstellung an einem Anschlag 41 der Standbeinhalterung 39 anliegt und dort verriegelt ist. Insbesondere beim simultanen Ausschwenken der Standbeine 3 aus der Ruhestellung in die Gebrauchsstellung schwenken die Standbeine 3 von selbst an die Anschläge 41 heran.

Den in den Fig. 3 bis 5 dargestellten beiden Ausführungsbeispielen ist überdies gemeinsam, daß das Standbein 3 ein Riegelelement 42 trägt, das an oder in einer kreisbogenförmigen Kulisse 43 in der Standbeinhalterung 39 läuft, deren Enden den Endstellungen des Standbeins 3 entsprechen. Für die Ausgestaltung derartiger Riegelelemente 42 gibt es im Stand der Technik eine Vielzahl von Anregungen. Die Anordnung der Kulisse 43 ist in den dargestellten Ausführungsbeispielen immer im Seitenblech der Standbeinhalterung 39 komplett geschlossen zu sehen. Alternativen mit randseitiger Kulisse finden sich im Stand der Technik.

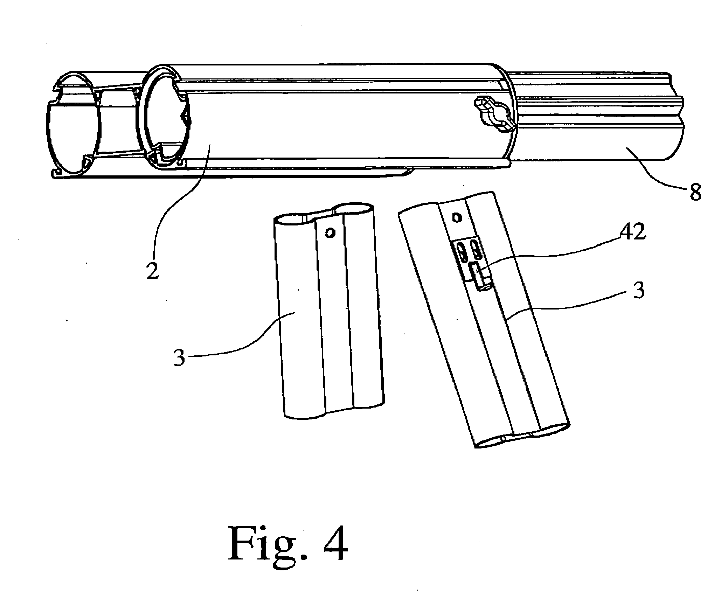

Dem in Fig. 3 und 4 dargestellten Ausführungsbeispiel ist die Besonderheit zu entnehmen, daß das Riegelelement 42 in die verriegelte Stellung, insbesondere aufwärts in Richtung des Tragkörpers 2, federvorgespannt ist, insbesondere, daß das Riegelelement 42 als federvorgespannter Schieber am Standbein 3 ausgeführt ist. Man sieht die eingerastete Endstellung, die der Gebrauchsstellung des Standbeins 3 entspricht, in Fig. 3.

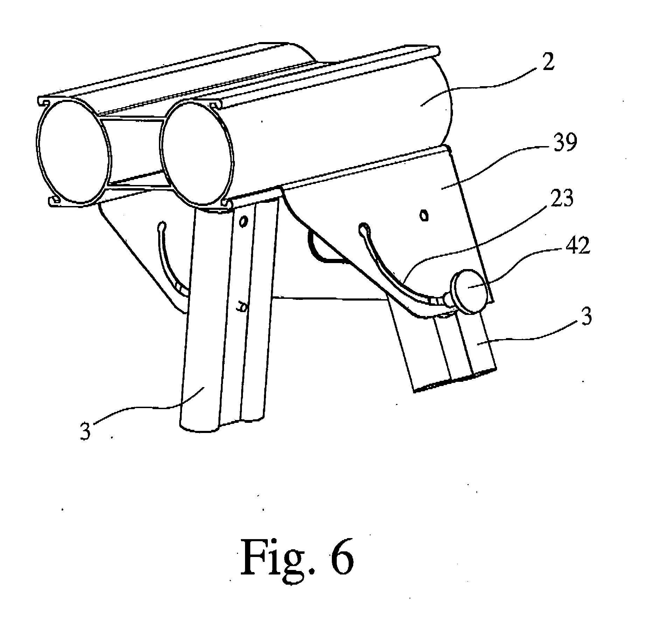

Demgegenüber ist bei dem in Fig. 6 dargestellten Ausführungsbeispiel die Besonderheit gegeben, daß das Riegelelement 42 als federbelasteter Zugknauf oder als Gewindeknauf ausgeführt ist und das Verriegeln des Standbeins 3 durch Einrasten des Zugknaufes oder Festdrehen des Gewindeknaufes erfolgt. Das in Fig. 21 dargestellte Ausführungsbeispiel zeigt einen in Eingriffsrichtung federbelasteten Zugknauf als Riegelelement 42. Die Kulisse 43 zeigt dort am linken Ende ebenfalls eine Erweiterung, so daß das Riegelelement 42 auch dort einrasten kann. Geht die Kulisse 43 durch, hat also keine Erweiterung an diesem Ende, so erfolgt in Ruhestellung des Standbeins 3 auch keine Verriegelung. Entsprechend könnte man das ganze System auch mit einem festziehbaren Gewindeknauf als Riegelelement 42 ausführen.

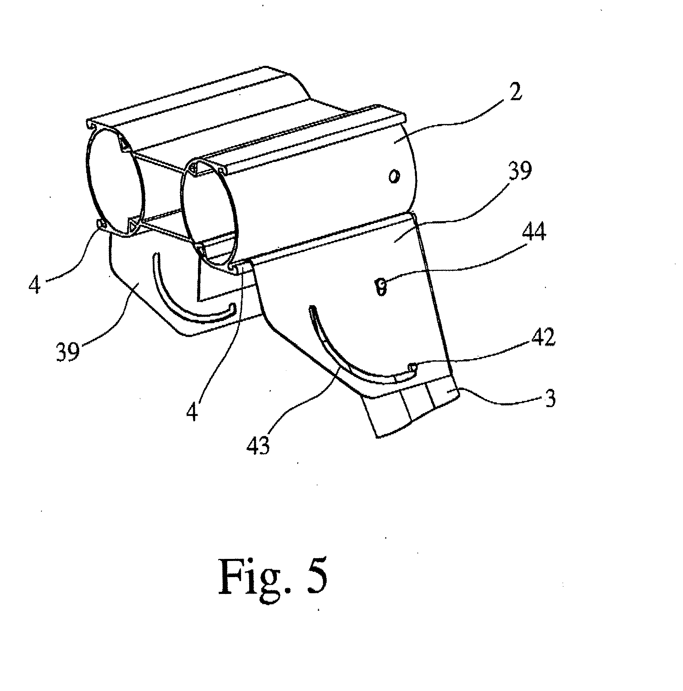

Das in Fig. 5 angedeutete Ausführungsbeispiel hat eine nochmals wieder andere Konstruktion dergestalt, daß die Schwenkachse 44 des Standbeins 3 selbst an der Standbeinhalterung 39 geringfügig, insbesondere in einem Langloch, längsverschiebbar gelagert ist. In der Gebrauchsstellung ist das Standbein 3, insbesondere unter Federkraft, aufwärts in Richtung des Tragkörpers 2 verschoben und zugleich das Riegelelement 42 an der Standbeinhalterung 39 eingerastet.

Wie bereits im Stand der Technik realisiert worden ist, hat man auch bei den hier dargestellten Ausführungsbeispielen des erfindungsgemäßen Maschinenständers realisiert, daß die beiden Standbeinhalterungen 39 an einem Ende des Tragkörpers 2 einteilig miteinander als Konsole ausgeführt sind. Dabei ist die Konsole zweckmäßigerweise aus abgekantetem und einbrennlackiertem Metallblech ausgeführt.

Die Befestigung der Konsole bzw. der in der Konsole zusammengefaßten Standbeinhalterungen 39 am Tragkörper 2 erfolgt zweckmäßigerweise dergestalt, daß an der Unterseite des Tragkörpers 2 vorzugsweise nach außen weisende leistenartige Formschlußmittel 4 angeordnet sind, in die passende Führungsmittel an den Standbeinhalterungen 39 bzw. an der Konsole stirnseitig einschiebbar sind. Auf diese Verschiebemöglichkeit ist weiter oben bereits eingegangen worden.

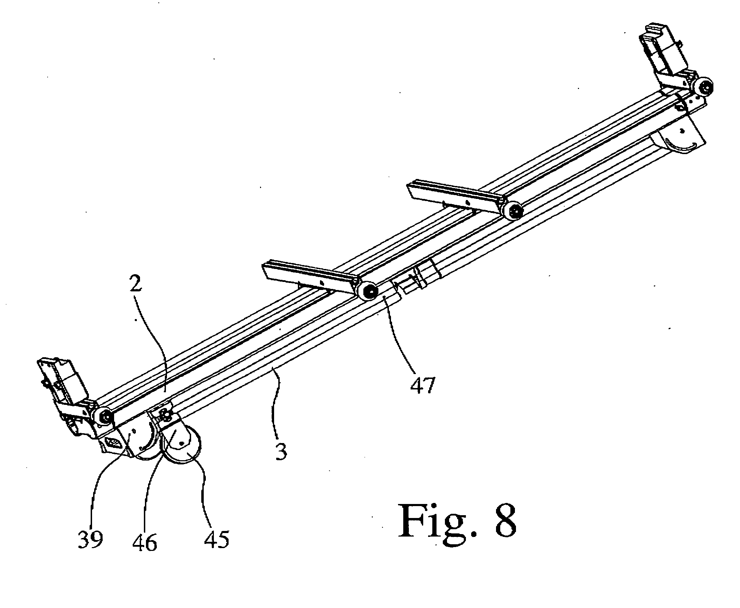

Schließlich machen die Darstellungen in Fig. 8 bis 10 noch eine besonders bevorzugte Ausgestaltung des erfindungsgemäßen Maschinenständers deutlich, die dadurch gekennzeichnet ist, daß an den Standbeinen 3, die an einem Ende des Tragkörpers 2 angeordnet sind, jeweils eine Transportrolle 45 angeordnet ist, die sich in Gebrauchsstellung des Standbeines 3 nahe an dessen unterem Ende befindet und ungefähr in Längsrichtung vom Standbein 3 abragt. Transportrollen 45 sind aus dem Stand der Technik für Maschinenständer der in Rede stehenden Art an sich bekannt. Ungefähr in Längsrichtung von Standbeinen 3 abragende Transportrollen 45 sind Standard für Baukreissägen und größere Tischkreissägen. So lassen sich durch Neigen des Traggestells die Transportrollen 45 auf den Boden bringen, so daß das Traggestell mitsamt der Werkzeugmaschine relativ einfach seitlich weggerollt werden kann. Dieses Konzept realisiert die Lehre auch bei dem vorliegenden Maschinenständer.

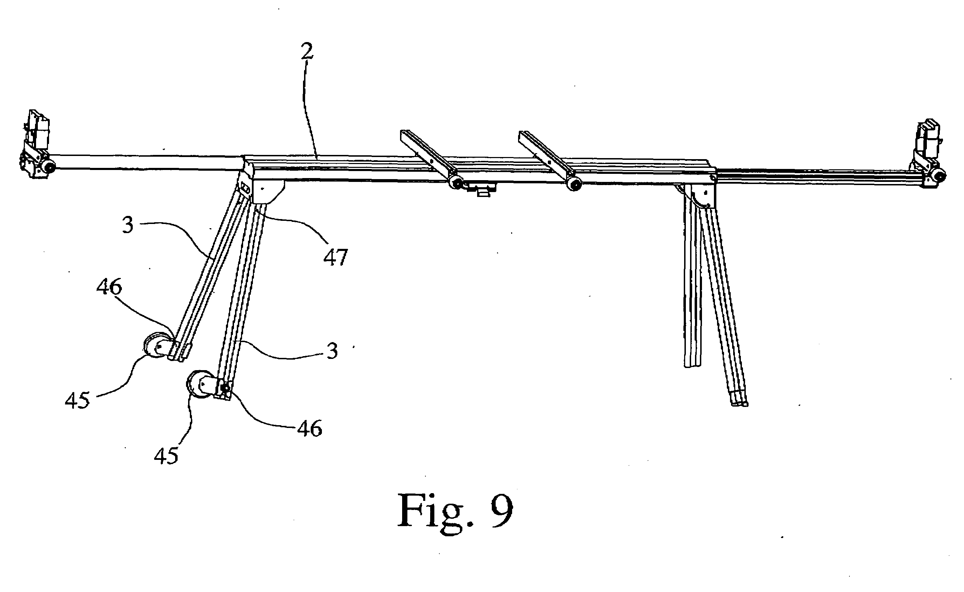

Die Besonderheit im vorliegenden Fall besteht jedoch darin, daß die Transportrolle 45 am Standbein 3 in einer Gebrauchsstellung nahe am unteren Ende und in einer Transportstellung nahe am tragkörperseitigen Ende anbringbar ist. Man sieht die unterschiedlichen Positionen der Transportrollen 45 an den beiden betroffenen Standbeinen 3 beim Vergleich von Fig. 8 und Fig. 9. So läßt sich tatsächlich auch der zusammengeklappte Maschinenständer mit den in Ruhestellung befindlichen Standbeinen 3 (Fig. 8) vorzüglich ziehen.

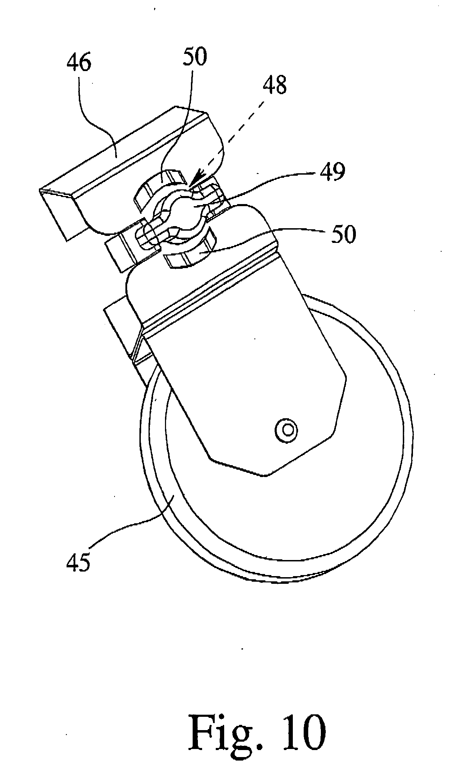

Fig. 10 zeigt Details einer Verschiebehalterung 46 am Standbein 3. Man erkennt, daß die Transportrolle 45 am Standbein 3 mittels einer Verschiebehalterung 46 angebracht und in Längsrichtung des Standbeins 3 verschiebbar und sowohl in ihrer Gebrauchsstellung als auch in ihrer Transportstellung am Standbein 3 fixierbar ist. Dabei erkennt man ferner, daß das Standbein 3 dort, wo die Verschiebehalterung 46 in der Gebrauchsstellung steht, wie auch dort, wo sie in der Transportstellung steht, eine Bohrung 47 aufweist und daß die Verschiebehalterung 46 einen federbelasteten Stift 48 trägt, der in die Bohrung 47 einrastbar ist. (Die Bohrung 47 ist in Fig. 8 und 9 am jeweils "nicht besetzten" Ende angedeutet, weil sie in Fig. 10 natürlich von der Verschiebehalterung 46 verdeckt ist.)

Die Besonderheit der Konstruktion in Fig. 10 besteht darin, daß der Stift 48 mit einem Knebel 49 o. dgl. drehbar ist, daß die Verschiebehalterung 46 eine Steuerkontur 50 aufweist und daß mittels der Steuerkontur 50 durch Drehung des Knebels 49 der Stift 48 quer zum Standbein 3 aus der Bohrung 47 entgegen Federkraftwirkung herausziehbar ist. Wenn man bei der Darstellung in Fig. 10 den Knebel 49 um 90° dreht, wird der darunter befindliche Stift 48 aus der darunter befindlichen Bohrung 47 im Mittelsteg des Standbeins 3 herausgezogen. Jetzt kann die Verschiebehalterung 46 mit der Transportrolle 45 auf dem Profil des Standbeins 3 in die andere Stellung geschoben werden. Dreht man jetzt den Knebel 49 in die in Fig. 10 dargestellte Stellung zurück, so schnappt der Stift 48 in die dortige Bohrung 47 unter Federkraft ein und die Verschiebehalterung 46 ist am anderen Ende des Standbeins 3 fixiert.

Auf diese Weise kann man mit der Verschiebehalterung 46 sicherstellen, daß die Transportrollen 45 immer an der für den jeweiligen Transportauftrag optimalen Stelle sitzen.

## Patentansprüche

1. Maschinenständer mit
einem langgestreckten Tragkörper (2) und
endseitig am Tragkörper (2) angeordneten Standbeinen (3),
wobei der Tragkörper (2) derart mit in Längsrichtung verlaufenden Formschlußmitteln (4) gestaltet ist, daß an ihm Anbauteile (5), insbesondere mindestens ein Maschinenhalter (5'), gegebenenfalls in Längsrichtung verschiebbar, anbringbar sind,
**dadurch gekennzeichnet,**
**daß** an jedem Ende des Tragkörpers (2) zwei Standbeine (3) angeordnet sind und daß jedes Standbein (3) mittels einer Standbeinhalterung (39) am Tragkörper (2) befestigt ist.

2. Maschinenständer nach Anspruch 1, **dadurch gekennzeichnet,**
**daß** jedes Standbein (3) mittels der Standbeinhalterung (39) schwenkbar gelagert ist dergestalt, daß es aus einer Ruhestellung mit etwa parallel zum Tragkörper (2) ausgerichteter Lage in eine Gebrauchsstellung mit gegenüber dem Tragkörper (2) nach unten und außen gerichteter Lage und umgekehrt schwenkbar ist.

3. Maschinenständer nach Anspruch 2, **dadurch gekennzeichnet,**
**daß** an der Unterseite des Tragkörpers (2) in der Mitte eine Halteanordnung (40) angebracht ist, in der die unteren Enden der Standbeine (3) in der Ruhestellung eingerastet sind und aus der die Standbeine (3) durch eine zentrale Handhabung freigebbar sind, wobei die zentrale Halteanordnung (40) insbesondere als Federstahlanordnung ausgebildet ist.

4. Maschinenständer nach einem der Ansprüche 1 bis 3, **dadurch gekennzeichnet,**
**daß** jedes Standbein (3) zumindest in der Gebrauchsstellung an einem Anschlag (41) der Standbeinhalterung (39) anliegt und dort verriegelt ist.

5. Maschinenständer nach einem der Ansprüche 1 bis 4, **dadurch gekennzeichnet,**
**daß** das Standbein (3) ein Riegelelement (42) trägt, das an oder in einer kreisbogenförmigen Kulisse (43) in der Standbeinhalterung (39) läuft, deren Enden den Endstellungen des Standbeins (3) entsprechen.

6. Maschinenständer nach Anspruch 5, **dadurch gekennzeichnet,**
**daß** das Riegelelement (42) in die verriegelte Stellung, insbesondere aufwärts in Richtung des Tragkörpers (2), federvorgespannt ist, insbesondere, daß das Riegelelement (42) als federvorgespannter Schieber am Standbein (3) ausgeführt ist.

7. Maschinenständer nach Anspruch 5, **dadurch gekennzeichnet,**
**daß** das Riegelelement (42) als federbelasteter Zugknauf oder als Gewindeknauf ausgeführt ist und das Verriegeln des Standbeins (3) durch Einrasten des Zugknaufes oder Festdrehen des Gewindeknaufes erfolgt.

8. Maschinenständer nach Anspruch 5, **dadurch gekennzeichnet,**
**daß** die Schwenkachse (44) des Standbeins (3) selbst an der Standbeinhalterung (39) geringfügig, insbesondere in einem Langloch, längsverschiebbar gelagert ist, daß in der Gebrauchsstellung das Standbein (3) aufwärts in Richtung des Tragkörpers (2) verschoben und zugleich das Riegelelement (42) an der Standbeinhalterung (39) eingerastet ist.

9. Maschinenständer nach einem der Ansprüche 1 bis 8, **dadurch gekennzeichnet,**
**daß** die beiden Standbeinhalterungen (39) an einem Ende des Tragkörpers (2) einteilig miteinander als Konsole ausgeführt sind.

10. Maschinenständer nach Anspruch 9, **dadurch gekennzeichnet, daß** die Konsole aus Metallblech ausgeführt ist.

11. Maschinenständer nach einem der Ansprüche 1 bis 10, **dadurch gekennzeichnet,**
**daß** an der Unterseite des Tragkörpers (2) vorzugsweise nach außen weisende leistenartige Formschlußmittel (4) angeordnet sind, in die passende Führungsmittel an den Standbeinhalterungen (39) bzw. an der Konsole stirnseitig einschiebbar sind.

12. Maschinenständer nach einem der Ansprüche 1 bis 11, **dadurch gekennzeichnet,**
**daß** an den Standbeinen (3), die an einem Ende des Tragkörpers (2) angeordnet sind, jeweils eine Transportrolle (45) angeordnet ist, die sich in Gebrauchsstellung des Standbeines (3) nahe an dessen unterem Ende befindet und ungefähr in Längsrichtung vom Standbein (3) abragt.

13. Maschinenständer nach Anspruch 12, **dadurch gekennzeichnet,**
**daß** die Transportrolle (45) am Standbein (3) in einer Gebrauchsstellung nahe am unteren Ende und in einer Transportstellung nahe am tragkörperseitigen Ende anbringbar ist.

14. Maschinenständer nach Anspruch 13, **dadurch gekennzeichnet,**
**daß** die Transportrolle (45) am Standbein (3) mittels einer Verschiebehalterung (46) angebracht und in Längsrichtung des Standbeins (31) verschiebbar und sowohl in ihrer Gebrauchsstellung als auch in ihrer Transportstellung am Standbein (3) fixierbar ist.

15. Maschinenständer nach Anspruch 14, **dadurch gekennzeichnet,**
**daß** das Standbein (3) dort, wo die Verschiebehalterung (46) in der Gebrauchsstellung steht, wie auch dort, wo sie in der Transportstellung steht, eine Bohrung (47) aufweist und daß die Verschiebehalterung (46) einen federbelasteten Stift (48) trägt, der in die Bohrung (47) einrastbar ist,
wobei, vorzugsweise, der Stift (48) mit einem Knebel (49) o. dgl. drehbar ist, die Verschiebehalterung (46) eine Steuerkontur (50) aufweist und mittels der Steuerkontur (50) durch Drehung des Knebels (49) der Stift (48) quer zum Standbein (3) aus der Bohrung (47) entgegen Federkraftwirkung herausziehbar ist.
